# EUROPEAN PATENT APPLICATION

(11) **EP 4 686 184 A1**
(43) Date of publication of application: **28.01.2026**
(21) Application number: 25190358.9
(22) Date of filing: 18.07.2025
(51) Int. Cl.: H04M 3/38, H04M 3/436, H04M 3/02

(54) **AUTOMATIC SILENT MODE EXCEPTION ACCORDING TO A TRUSTED CALLER**

(30) Priority: 25.07.2024 US 202418784423
(71) Applicant: Microsoft Technology Licensing, LLC, Redmond, WA 98052 (US)
(72) Inventor: SARKAR, Tapas Kumar, Redmond, Washington 98052 (US)
(74) Representative: CMS Cameron McKenna Nabarro Olswang LLP

(57) **Abstract**

Systems and methods are provided for selectively generating a notification on a callee device for an incoming call for a call session. The caller device registers a callee as a trusted partner callee in the caller device, thereby enabling the caller to initiate a call session request as a priority call to the callee. The callee device registers the caller as a trusted partner caller in the callee device. The callee device enables the callee to activate the silent mode and an exception to the silent mode. The caller device transmits a call session request with a priority call to the callee device. The callee device rings to notify the callee about the incoming call upon receiving a call session request for a priority call from a trusted partner caller while the silent mode and the exception operation are both active. A call session starts when the callee device answers.

## Description

### BACKGROUND

Users generally want the ability for a to selectively take important phone calls while blocking unwanted calls. Various features, including a do-not-disturb feature and a silent mode, have been available on the user's phones do not provide the flexibility for a user to control who can and cannot interrupt them.

It is with respect to these and other general considerations that the aspects disclosed herein have been made. In addition, although relatively specific problems may be discussed, it should be understood that the examples should not be limited to solving the specific problems identified in the background or elsewhere in this disclosure.

### SUMMARY

Aspects of the present disclosure relate to a system for notifying a callee of an incoming call by ringing a callee device as an exception to a silent mode of the callee device. The system comprises a caller device and a callee device. The caller device comprises a processor configured to execute operations comprising registering a callee as a trusted partner callee in the caller device, interactively receiving a selection of the callee to initiate a priority call to the callee and transmitting a request to initiate the priority call to a callee device of the callee. The caller device enables the caller to initiate a priority call when the callee is registered as a trusted partner callee in the caller device and the caller specifies initiating a call to the callee as a priority call. When the callee device responds to the caller device to establish a call session, the caller device establishes the call session.

The callee device registers a caller as a trusted partner caller in a trusted partner caller list. The callee device further activates a silent mode and an exception operation of the silent mode in the callee device. When the callee device receives an incoming call request from the calling device, the callee device determines whether the caller is registered as a trusted partner caller in the callee device The callee device further determines whether the incoming call is a priority call. When the incoming call is a priority call from a trusted partner caller (and the silent mode and an exception operation of the silent mode are both active in the callee device), the callee device rings the callee device to alert the callee. A call session between the caller and the callee starts when the callee answers the incoming call from the caller.

This Summary is provided to introduce a selection of concepts in a simplified form, which is further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the following description and, in part, will be apparent from the description, or may be learned by practice of the disclosure.

### BRIEF DESCRIPTIONS OF THE DRAWINGS

Non-limiting and non-exhaustive examples are described with reference to the following figures.
FIG. 1 illustrates an overview of an example system for silent mode exception in accordance with aspects of the present disclosure.
FIG. 2 illustrates an overview of an example system for silent mode exception in accordance with aspects of the present disclosure.
FIG. 3A-B illustrate example graphical user interfaces of a caller device in accordance with aspects of the present disclosure.
FIG. 3C-D illustrate example graphical user interfaces of a callee device in accordance with aspects of the present disclosure.
FIG. 4 illustrates an example of a method for initiating a call by a caller device in accordance with aspects of the present disclosure.
FIG. 5 illustrates an example of a method for receiving a call by a callee device in accordance with aspects of the present disclosure.
FIG. 6 is a block diagram illustrating example physical components of a computing device with which aspects of the disclosure may be practiced.
FIG. 7 is a simplified block diagram of a computing device with which aspects of the present disclosure may be practiced.

### DETAILED DESCRIPTION

Devices in telecommunications and Voice-over-IP systems provide a variety of functions that enable a callee to selectively take a call and/or block incoming notifications. For example, a do-not-disturb function enables a callee to disable notifications for incoming calls and messages. Silent mode of a callee device traditionally enables the callee to set the callee device not generate notifications (i.e., a ring, beep, vibrate) when the callee device receives a call or message. The do-not-disturb function also traditionally provides an exception function. In some aspects, the callee device rings, notifies the callee about an incoming call, and may disable the do-not-disturb function, when the incoming call is from a phone number that has been registered in a favorite caller list. In aspects, the callee preregisters the caller in the favorite caller list.

Despite availability of these functions to a callee, there remains situations where a callee does not received notifications for a call or message that is important to the callee. Examples of the callee missing an important call include a situation of disabling the do-not-disturb function on a callee device while activating the silent mode function for all incoming calls. The callee would not notice the incoming call even if the caller is on a favorite caller list of the do-not-disturb function because the callee device does not ring the callee phone when an incoming call from the caller on the favorite caller list arrives.

Some traditional do-not-disturb function does not distinguish between a priority call and a non-priority (e.g., normal) incoming call when a callee device processes the incoming call. An issue may arise when a callee activates the do-not-disturb function on a callee device while the callee does not wish to be disturbed because of participating in a meeting or a high priority task at hand. A non-priority (e.g., normal) call from a caller who may be highly important for the callee is missed by the callee because the callee device maintains the do-not-disturb function as active and refrains from ringing the callee device to inform the callee about the incoming call. The caller should have been listed in the favorite caller list by the callee for the callee device to ring the incoming call from the caller.

The term "caller" refers to a user who places a phone call to a callee. The term "callee refers to a user who receives a call from the caller. The term "caller device" refers to a device (e.g., a handset, a smartphone, and the like) that is used by a caller to initiate and establish a call with a callee device. The term "callee device" refers to a device (e.g., a handset, a smartphone, and the like) that is used by a callee to receive and establish a call with a caller device. A Session Initiation Protocol ("SIP") protocol refers to a communication protocol used by caller devices, callee devices, and a SIP server to initiate, establish and end a SIP session (e.g., a Voice-over-IP call) between the caller and callee devices through the SIP server.

The term "silent mode" refers to a function on a callee's handset to disable ringing when receiving an incoming call. The term "do-not-disturb" mode refers to a function on the callee's handset disabling notifications of incoming calls and further providing indication to a caller not to disturb the callee while the callee's handset is in the do-not-disturb mode.

Various aspects of the disclosure are described more fully below with reference to the accompanying drawings, which from a part hereof, and which show specific example aspects. However, different aspects of the disclosure may be implemented in many different ways and should not be construed as limited to the aspects set forth herein. Rather, these aspects are provided so that this disclosure will be thorough and complete. These aspects will fully convey the scope of the aspects to those skilled in the art. Practicing aspects may be as methods, systems, or devices. Accordingly, aspects may take the form of a hardware implementation, an entirely software implementation or an implementation combining software and hardware aspects. The following detailed description is, therefore, not to be taken in a limiting sense.

As discussed in more detail below, the present disclosure relates to automatically and selectively notifying a callee about an incoming call by a callee device. In particular, the present technology is directed to allowing a caller to initiate a priority call when the caller registers a callee among trusted partner callees and selects initiating a priority call when the caller dials the callee. Given the priority call placed by the caller, the callee device in a silent mode identifies the incoming call as a priority call based on an identifier of the caller data associated with the incoming call. The callee device determines the incoming call as an exception to a silent mode of the callee device when the callee device determines that the caller has been registered as a trusted partner caller. The callee device, based on the determined caller as the trusted partner caller and the incoming call as a priority call, rings and notifies the callee about the incoming call from the caller as an exception operation to the active silent mode of the callee device.

The present technology addresses a technical issue of alerting a callee about an incoming call that are of interest to the callee with accuracy and provide for granular control of which calls can generate notifications. The present technology is directed to independently registering the caller as a trusted partner caller in a callee device and the callee as a trusted partner callee in a caller device. The registration of the callee as a trusted partner callee in the caller device further enables the caller to initiate a priority call to the callee.

The registrations as a trusted partner caller and a trusted partner callee in the respective devices enable the callee device to operate an exception to a silent mode and to cause a notification (e.g., a ring, vibrate, etc.) when the callee device receives an incoming call from the trusted partner caller as a priority call. The call session request comprises caller and callee information and designation of a priority call.

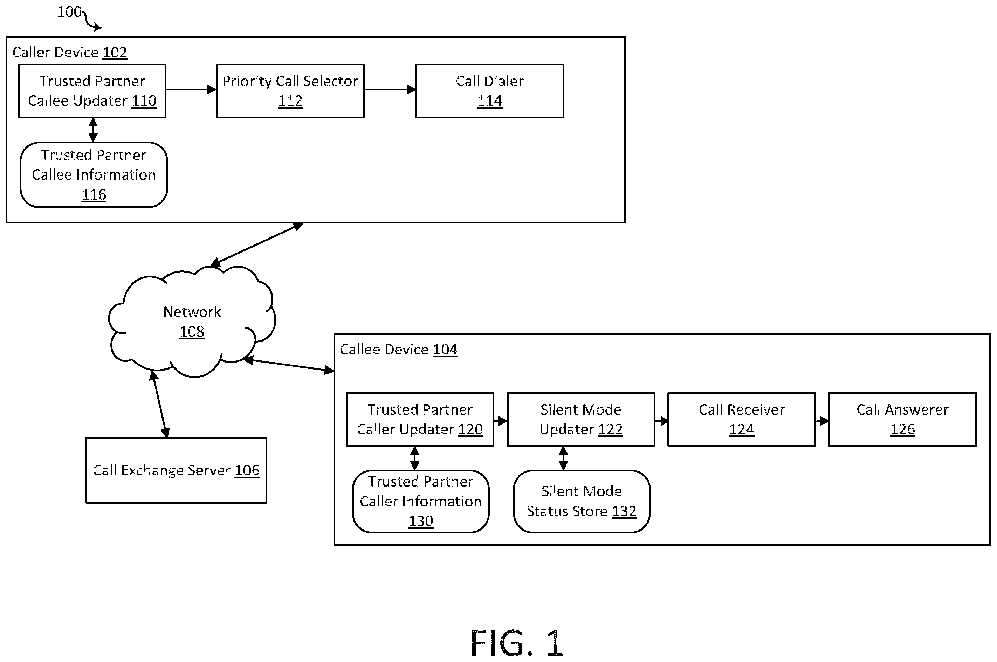

FIG. 1 illustrates an overview of an example system for silent mode exception in accordance with aspects of the present disclosure. A system 100 comprises caller device 102, callee device 104, call exchange server 106, and network 108. The caller device 102 represents a handset that initiates a call as a caller to the callee device 104. The callee device 104 represents another handset that receives as a callee the call from the caller. The call exchange server 106 receives a call request from the caller device 102 and communicates with the callee device 104 to initiate a call over the network 108. In aspects, the call exchange server 106 represent a Session Initiation Protocol (SIP) server that connect the caller device 102 and the callee device 104 respectively as SIP clients using a SIP protocol. In some other aspects, the call exchange server 106 represents as an exchange equipment of a plain old telephone service (POTS).

The caller device 102 comprises trusted partner callee updater 110, priority call selector 112, and call dialer 114. The trusted partner callee updater 110 updates registration of a trusted partner callee. The priority call selector 112 receives an interactive selection of an outbound call as a priority call based on a callee registered as a trusted partner callee. The call dialer 114 dials an outgoing call to a callee. In aspects, the caller device 102 enables a caller to interactively select a registered trusted partner callee and a priority. Given the interactive selections, the caller device 102 transmits a call session request to the callee device of the registered trusted partner callee as the priority call through the call exchange server 106 through the network 108.

The callee device 104 comprises trusted partner caller updater 120, silent mode updater 122, call receiver 124, and call answerer 126. The trusted partner caller updater 120 interactively updates registration of a caller as a trusted partner caller in a trusted partner caller information 130 in the callee device 104. The silent mode updater 122 interactively updates an active status of a silent mode of the callee device as stored in silent mode status store 132.

The silent mode updater 122 further interactively updates a status of an exception operation of the silent mode and stores the status of the exception operation of the silent mode in the silent mode status store 132. The call receiver 124 receives a call session request from the caller device 102 through the call exchange server 106 over the network. The call answerer 126 responds to the call session request to initiate a call session when the callee answers the call by picking up the incoming call while the callee device 104 alerts the callee about the incoming call.

In aspects, the silent mode, when activated in the callee device, causes the callee device 104 to suppress a ringtone sound when the callee device 104 receives an incoming call. In some aspects, the exception operation of the silent mode, when activated while the silent mode is also activated in the callee device 104, causes the callee device 104 to generate a ringtone sound when the callee device receives a call session request as a priority call from a registered trusted partner caller.

As will be appreciated, the various methods, devices, applications, features, etc., described with respect to FIG. 1 are not intended to limit the system 100 to being performed by the particular applications and features described. Accordingly, additional controller configurations may be used to practice the methods and systems herein and/or features and applications described may be excluded without departing from the methods and systems disclosed herein.

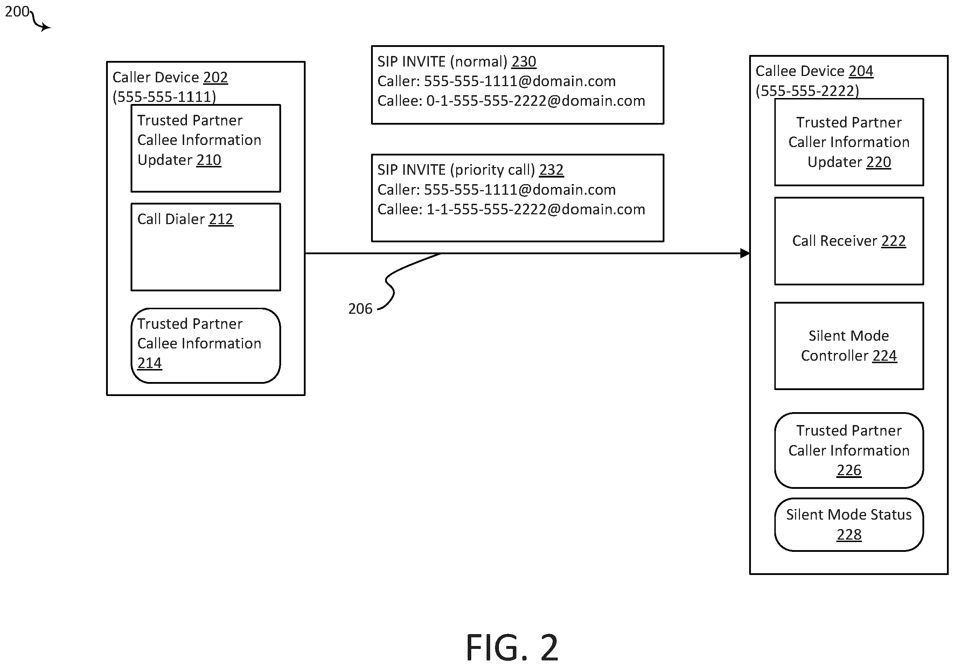

FIG. 2 illustrates an overview of an example system for operating an exception to a silent mode of a callee device in accordance with aspects of the present disclosure. System 200 comprises caller device 202, callee device 204, and network 206. The caller device 202 transmits a call request to initiate a call session to the callee device 204 via the network 206.

In aspects, the caller device 202 has a phone number (i.e., a caller identifier) of "555-555-1111." The caller device 202 comprises trusted partner callee information updater 210, call dialer 212, and trusted partner callee information 214. In aspects, the trusted partner callee information updater 210 interactively updates trusted partner callee information. The call dialer 212 performs dialing a callee's phone number to initiate a call with the callee. The trusted partner callee information 214 comprises information of one or more callees who are trusted partners of the caller. In aspects, the trusted partner callee information 214 comprises a phone number of a trusted partner callee, a name of the trusted partner callee, whether to initiate a priority call to the trusted partner callee, and the like (not shown in FIG. 2).

In aspects, the callee device 204 has a phone number (i.e., a callee identifier) of "555-555-2222." The callee device 204 comprises trusted partner caller information updater 220, call receiver 222, and silent mode controller 224. The trusted partner caller information updater 220 interactively updates trusted partner caller information 226. The call receiver 222 performs receiving a call from the caller device 202 with the caller's phone number. The trusted partner caller information 226 comprises information of one or more callers who are trusted partners of the callee. In aspects, the trusted partner caller information 226 comprises a phone number and/or an identifier of a trusted partner caller, a name of the trusted partner caller, whether to receive a priority call from the trusted partner caller, and the like (not shown in FIG. 2). The silent mode controller 224 interactively maintains a status of a silent mode of the callee device 204.

In aspects, the phone number and/or the identifier of a trusted partner caller represents an identify of a group that comprises a plurality of callers with respective caller devices. In examples, the group represents a corporate entity that includes managers and employees as users. The corporate entity may distribute devices for making and receiving calls to the managers and employees as users. In some aspects, a callee device registers a phone number as an identity of the corporate entity as a trusted partner caller as trusted partner caller information. The devices as distributed by the corporate entity include a callee number (e.g., a phone number and/or an identifier of the callee device) as a trusted partner callee registered in a trusted partner caller information. Given the registrations of the trusted partner caller information and the trusted partner callee information, the managers and employees of the corporate entity may place a priority call to the callee device and causes the callee device to override the silent mode and alerts a user of the callee device. Registering an organization (e.g., a group of users) as a trusted partner caller information and/or in a trusted partner information in examples enables managers and employees of the organization to place calls that overrides the Silent mode.

In aspects, the silent mode comprises two states: ON and OFF. When the silent mode is in an ON state, the callee device 204 suppresses playing a ringtone (i.e., no ringing, no ringtone sound, and the like) for notifying an incoming call to the callee. When the silent mode is an OFF state, the callee device 204 rings for notifying an incoming call to the callee. In aspects, the callee who uses the callee device 204 may interactively specify a status of the silent mode.

The network 206 transfers a call command signal from the caller device 202 to the callee device 204. In aspects, the system 200 uses the SIP protocol to administer calls. In aspects, the call dialer 212 of the caller device 202 transmits SIP INVITE (normal) command 230 to the call receiver 222 of the callee device 204 over the network 206. In some aspects, the caller device 202 transmits the SIP INVITE (normal) command 230 to the callee device 204 through a SIP server (not shown in FIG. 2) over the network 206. In aspects, the SIP INVITE (normal) command 230 includes caller information of "555-555-1111@domain.com" and callee information of 0-1-555-555-2222@domain.com. In aspects, the leading first digit with a value zero specifies that the call being initiated by the call dialer 212 of the caller device 202 is a normal call.

In some other aspects, the call dialer 212 of the caller device 202 transmits an SIP INVITE (priority call) command 232 to the callee device 204 over the network 206. The SIP INVITE (priority call) command 232 may comprise caller information of "555-555-1111@domain com" and callee information of 1-1-555-2222@domain.com. In aspects, the leading first digit with a value one (1) of the callee information specifies that the call being initiated by the call dialer 212 of the caller device 202 is a priority call. The callee device 204 may process distinctly based on whether a received call is the normal call or the priority call.

Designation of the priority call is not limited to a value of the leading digit of the callee information. In aspects, other examples of the designation of a priority call may include an appended character of the callee information, a part of the caller information, a value in a header of the SIP INVITE command, and the like.

In aspects, the call receiver 222 of the callee device 204 may generate and play a ringing tone in the callee device 204 even despite the silent mode of the callee device being active. Examples of the exceptional situation to the silent mode include, but not limited to when the call receiver 222 receives a SIP INVITE command that specifies a priority call and the caller as indicated by the caller information is among callers who are registered in the trusted partner caller information 226.

Additionally. or alternatively, the call receiver 222 maintains the silent mode of the callee device 204 and does not ring the callee device 204 when the caller of the priority call is not a trusted partner caller who is registered in the trusted partner caller information 226 in the callee device 204. In some aspects, the silent mode controller 224 resumes the active status of the silent mode when a call session of the priority call ends. In some other aspects, the silent mode controller 224 maintains the active silent mode of the callee device.

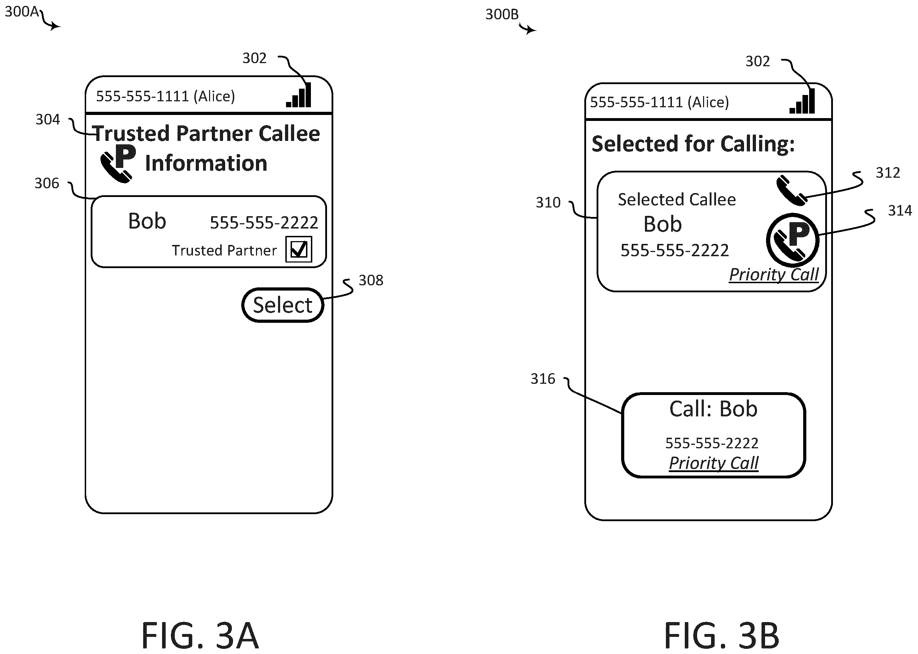

FIG. 3A-B illustrate example graphical user interfaces for a caller in accordance with aspects of the present disclosure. FIG. 3A illustrates an example graphical user interface 300A for selecting a trusted partner callee in a trusted partner callee information in a caller device. The example graphical user interface 300A indicates Alice as a user of the caller device and Alice's call identifier (e.g., a phone number) "555-555-1111." Signal strength indicator 302 indicates a signal strength of wireless connection of the caller device (e.g., the caller device 102 as shown in FIG. 1). Trusted partner callee information 304 comprises one or more callees who are registered as trusted partner callees (numbers) of a caller (number). In examples, the trusted partner callee information 304 may be in list form, indexed by a callee identifier (e.g., a phone number of the callee) for enabling searching for a trusted partner callee.

In aspects, a user of the caller device as the caller selects a trusted partner callee from the trusted partner callee information 304 for initiating a call. In examples, the trusted partner callee information 304 indicates a callee entry 306. The callee entry 306 indicates information about a registered trusted partner callee. The callee entry 306 indicates "Bob" as a name of the registered trusted partner callee, a calling identifier (e.g., a phone number) "555-555-2222" of Bob, and a selection of Bob as a Trusted Partner. "Select" interactive button 308 represents an interactive graphical interface for selecting a callee to initiate a call from the caller to the callee.

Selecting the "Select" interactive button 308 enables a user of the caller device to select a callee from the trusted partner callee information 304 to initiate a call to the callee. In some aspects, the graphical user interface 300A may further provide a graphical user interface for enabling the user of the caller device to interactively add, modify, and/or delete a callee from the trusted partner callee information (Not shown in FIG. 3A).

FIG. 3B illustrates an example graphical user interface 300B of a caller device (e.g., the caller device 102 as illustrated in FIG. 1). In aspects, the example graphical user interface 300B comprises signal strength indicator 302, a selected callee 310, a normal call selector 312, a priority call selector 314, and a call button 316.

The example graphical user interface 300B indicates Alice as a user of the caller device and Alice's call identifier (e.g., a phone number) "555-555-1111." Signal strength indicator 302 indicates a signal strength of wireless connection of the caller device (e.g., the caller device 102 as shown in FIG. 1). The example graphical user interface 300B further indicates a selected callee 310 and a call button 316. The selected callee 310 indicates "Bob 555-555-2222" as a name of the selected trusted partner callee number from the trusted partner callee information 304 as shown in FIG. 3A. The selected callee 310 further comprises a normal call selector 312 and a priority call selector 314. In aspects, when a callee is a trusted partner callee, the selected callee 310 displays both the normal call selector 312 and the priority call selector 314 to the caller to select one of them to initiate a call. The selected callee 310 in the example graphical user interface 300B indicates the priority call selector 314 as an interactive graphical icon being highlighted. According to the selection of the priority call selector 314, the call button 316 indicates "Call: Bob 555-555-2222 as a priority call."

In examples, when the caller selects the call button 316, the caller device initiates a priority call to a callee device of Bob by transmitting a SIP INVITE command. The SIP INVITE call may include a combination of Alice in the caller information, Bob in the callee information, and designation of the call as a priority call.

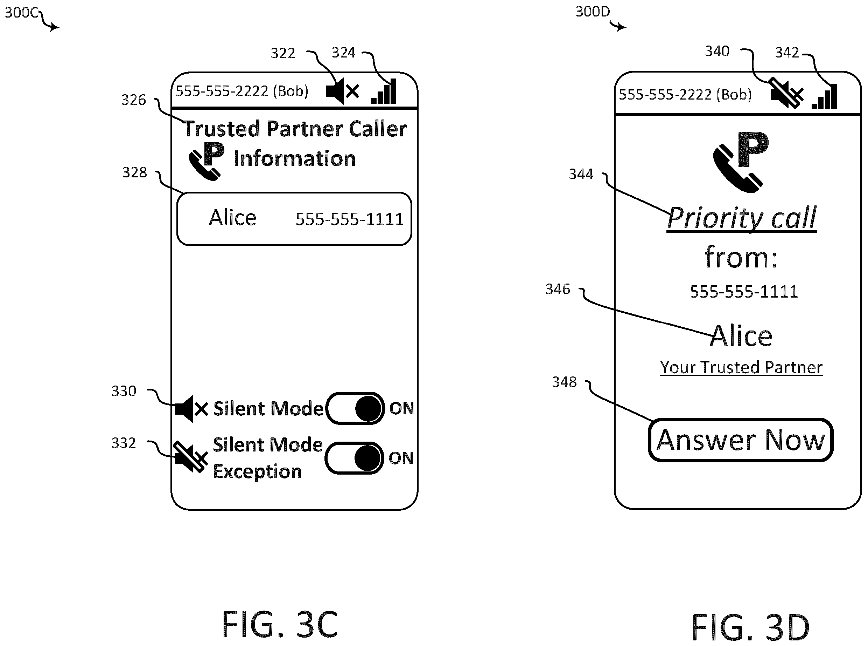

FIG. 3C-D illustrate example graphical user interfaces for a callee in accordance with aspects of the present disclosure. FIG. 3C illustrates an example graphical user interface 300C for displaying and registering a trusted partner caller in a trusted partner caller information 326 in a callee device (e.g., the callee device 104 as shown in FIG. 1). The example graphical user interface 300C indicates Bob as a user of the callee device and Bob's call identifier (e.g., a phone number) "555-555-2222." Silent mode indicator 322 indicates that the silent mode of the callee device is currently active. Signal strength indicator 324 indicates a signal strength of wireless connection of the callee device.

Trusted partner caller information 326 comprises one or more callees who are registered as trusted partner callees of a caller. In examples, the trusted partner caller 328 indicates a trusted partner caller "Alice" with a caller identifier of "555-555-1111."

The example graphical user interface 300C further indicates silent mode selector 330 and silent mode exception selector 332. In examples, the silent mode selector 330 indicates that the silent mode is active ("ON") in the callee device. The silent mode exception selector 332 indicates that the silent mode exception is active ("ON") in the callee device. In aspects, when the silent mode exception is active, the callee device plays a ringtone when the callee device receives a priority call from a trusted partner caller. In examples, the callee device rings when the callee device receives a priority call from Alice who is registered in the callee device as a trusted partner caller.

FIG. 3D illustrates an example graphical user interface 300D for displaying and receiving a call as an exception to the silent mode in a callee device (e.g., the callee device 104 as shown in FIG. 1). The example graphical user interface 300D indicates Bob as a user of the callee device and Bob's call identifier (e.g., a phone number) "555-555-2222." Silent mode indicator 340 indicates an icon that represents a state where an exception of the silent mode of the callee device active. While the exception to the silent mode is active, the callee device plays a ringtone when the callee device receives a priority call from a trusted partner caller. Signal strength indicator 342 indicates a signal strength of wireless connection of the callee device.

The example graphical user interface 300D further indicates a priority call 344 as an incoming call request as being received as by the callee device. The priority call 344 indicates "Priority call from: 555-555-1111 Alice, Your Trusted Partner." In aspects, the callee device displays the priority call 344 and generates a ringtone sound to notify the callee (i.e., Bob) about the priority call being received. The callee device further displays an "Answer Now" button 348 to the callee number. The "Answer Now" button 348 represents an interactive button that receives an interactive input from the callee to answer the priority call. When the callee device receives an interactive selection of the "Answer Now" button 348, the callee device starts a call session with the caller device (e.g., a call session with Alice).

In aspects, The caller device and the callee device communicate according to the SIP protocol. The callee device, based on the SIP protocol, transmits a "ringing" message to the caller device through the SIP server while displaying the priority call 344 and playing a ringtone (e.g., generating a ringtone sound) on the display device. When the callee device receives an interactive selection of the "Answer Now" button 348, the callee device may transmit the 200 OK message to the caller device through the SIP server. Subsequently, the callee device may receive an Ack message and start a SIP call session with the caller device.

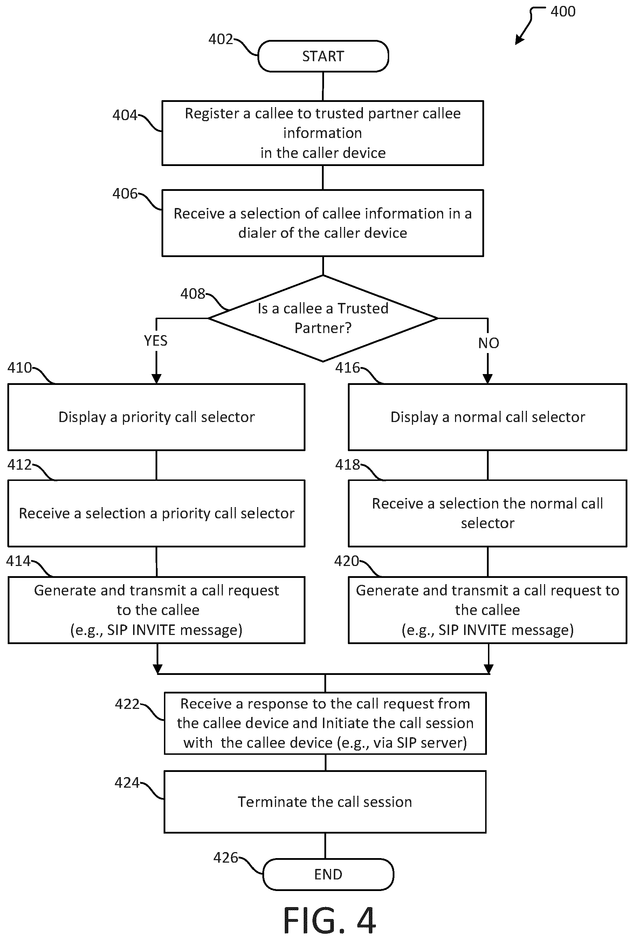

FIG. 4 illustrates an example of a method for initiating a call session by a caller device in accordance with aspects of the present disclosure. A general order of the operations for the method 400 for dynamically selecting a packet handler to balance loads among a plurality of packet handlers is shown in FIG. 4. Generally, the method 400 begins with start operation 402. The method 400 may include more or fewer steps or may arrange the order of the steps differently than those shown in FIG. 4.

The method 400 can be executed as a set of computer-executable instructions executed by a computer system and encoded or stored on a computer readable medium. Further, the method 400 can be performed by gates or circuits associated with a processor, an ASIC, an FPGA, a SOC or other hardware device. Hereinafter, the method 400 shall be explained with reference to the systems, components, devices, modules, software, data structures, data characteristic representations, signaling diagrams, methods, etc., described in conjunction with FIGS. 1, 2, 3A-3D, 5, 6, and 7.

Following start operation 402, the method 400 begins with register operation 404 by a caller device, in which a callee information is registered (e.g., added) as a trusted partner callee number in a trusted partner callee information in the caller device. In receive operation 406, an interactive selection of a callee (e.g., the selected callee 310 indicating "Bob" as shown in FIG. 3A) by a caller is received in the caller device.

In a decision operation 408, whether the callee number is a trusted partner callee number is determined. In aspects, the decision operation 408 may further comprise looking up the trusted partner callee information to identify the callee number as a trusted partner callee number.

When the callee number is a trusted partner callee number (i.e., "Yes"), the method 400 proceeds to display operation 410. In display operation 410, a priority call selector is displayed on the caller device for selection by the caller. In aspects, the caller device enables the caller to select a priority call when a callee (e.g., a callee number, a callee identifier, and the like) is registered as a trusted partner callee in the trusted partner callee information. In examples, the caller device displays the priority caller selector in a selectable icon form (e.g., the priority call selector 314 as shown in FIG. 3B). In aspects, the priority call selector icon is highlighted when the caller selects the priority call selector icon.

In receive operation 412, an interactive selection of the priority call selector is received by the caller device. In aspects, the receive operation 412 further includes displaying a "call" button (e.g., the "Call Bob" button as shown in FIG. 3B) in response to receiving the interactive selection of the priority call selector.

In transmit operation 414, a call request is transmitted by the caller device by specifying a callee device (e.g., "Bob" as shown in FIG. 3B) by a phone number of the callee device. In aspects, the call request may comprise a SIP INVITE message that is transmitted by the caller device to a SIP server. The SIP server then transmits the SIP INVITE message to the callee device. The SIP INVITE message further indicates the call being requested is a priority call. In examples, an indication of the priority call is according to a prefix or appended number or a character in the callee identifier (e.g., a phone number of the callee in the SIP INVITE (priority call) 232 as shown in FIG. 2).

When the callee number is not a trusted partner callee number (i.e., "No") in the decision operation 408, the method 400 proceeds to display normal call selector operation 416. In examples, in the display normal call selector operation 416, the caller device displays a normal call selector in icon (e.g., the normal call selector in a selectable icon form (e.g., the normal call selector 312 as shown in FIG. 3B). In aspects, the normal call selector icon is highlighted when the caller selects the normal call selector icon in the caller device.

In examples, the caller device displaying both the normal call selector and the priority call selector when the selected callee number is a trusted partner callee number (e.g., displaying both the normal call selector 312 and the priority call selector 314 as selectable icons as shown in FIG. 3B). The display of both types of selector icons enables the caller to select one of them for initiating a call to the callee number. In some aspects, the present technology enables the caller to request a call session without causing an exception to the silent mode in the callee device by the caller selecting the normal call selector icon.

In receive normal call selection operation 418, an interactive selection of the normal call selector is received by the caller device. In aspects, the receive normal call selection operation 418 further comprises displaying a "call" button (e.g., the call button 316 as shown in FIG. 3B) for initiating a normal call to the callee.

In transmit operation 420, the caller device transmits a call request to the callee device. In aspects, the transmit operation 420 comprises the caller device transmitting a SIP INVITE message to a SIP server according to the SIP protocol. The SIP server, in turn, transmits the SIP INVITE message to the callee device. The SIP INVITE message indicates the callee device by a phone number of the callee device and further indicates the call being requested is a normal call. In examples, an indication of the normal call is according to a prefix or appended number or a character in the callee identifier (e.g., a phone number of the callee in the SIP INVITE (normal call) 230 as shown in FIG. 2).

In initiate operation 422, a call session is initiated after the caller device receives a response to the call request from the callee device. In aspects, a type of the call session is based on whether the priority call or the normal call has been specified by the call request. In some other examples, a type of the call session is identical regardless of a type of a call as specified in the call request; here, the type of call session being requested by the call request is used by the callee device to determine whether to accept the call request to initiate a call session without setting a level of priority to the call session.

In terminate operation 424, the call session is terminated. The termination of the call session may be initiated by either one or both of the caller device and the callee device. The caller or callee hanging up a call causes the call session to terminate. In aspects, the SIP server communicates with both the caller device and the callee device to terminate the call session.

In aspects, the method 400 may end at end operation 426. As should be appreciated, operations 402-426 are described for purposes of illustrating the present methods and systems and are not intended to limit the disclosure to a particular sequence of steps, e.g., steps may be performed in different order, additional steps may be performed, and disclosed steps may be excluded without departing from the present disclosure.

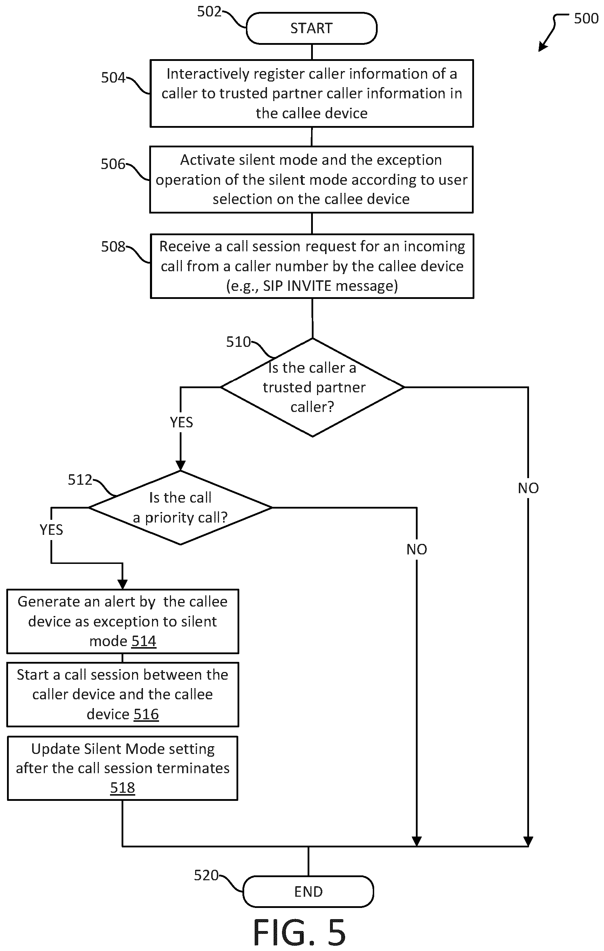

FIG. 5 illustrates an example of a method for receiving a call by a callee device in accordance with aspects of the present disclosure. A general order of the operations for the method 500 for receiving a call is shown in FIG. 5. Generally, the method 500 begins with start operation 502. The method 500A may include more or fewer steps or may arrange the order of the steps differently than those shown in FIG. 5A. The method 500A can be executed as a set of computer-executable instructions executed by a computer system and encoded or stored on a computer readable medium. Further, the method 500A can be performed by gates or circuits associated with a processor, an ASIC, an FPGA, a SOC or other hardware device. Hereinafter, the method 500A shall be explained with reference to the systems, components, devices, modules, software, data structures, data characteristic representations, signaling diagrams, methods, etc., described in conjunction with FIGS. 1, 2, 3A-3D, 4, 6, and 7.

Following start operation 502, the method 500 begins with add caller operation 504, in which a caller information is added as a trusted partner caller to a callee's trusted partner caller information in the callee device. In aspects, the adding (e.g., registering) the caller as the callee's trusted partner caller in the callee device interactively by the callee enables an exception operation to a silent mode of the callee device. The exception operation executes when the callee device receives a priority call from the caller as the trusted partner caller. In examples, the exception operation to the silent mode comprises generating an alert (e.g., ringing, playing a ringtone, flashing, and the like) the callee device to notify a user of the callee device (and/or the callee number) of the incoming call from the trusted partner caller even when the silent mode is active.

In activate silent mode operation 506, a silent mode is activated in the callee device. The activate silent mode operation 506 may be performed in response to interactive operation by the callee (e.g., the user of the callee device) to select activation of the silent mode (e.g., the silent mode selector 330 as shown in FIG. 3C).

In receive a call session request operation 508, a call session request for an incoming call from a caller number is received by the callee device. In aspects, the callee device receives a SIP INVITE message from a SIP server according to the SIP protocol during the receive a call operation 508 when the caller device and the callee device operate according to the SIP protocol. In examples, the SIP INVITE message comprises information about the caller with a caller identifier (e.g., a phone number of the caller) and a type of the call (e.g., whether the incoming call is a priority call).

In determining a trusted partner caller operation 510, whether the caller is a trusted partner caller is determined by the callee device. In aspects, the callee device determines whether the caller is in the trusted partner caller information. The caller is a trusted partner caller of the callee device when the caller of the incoming call is in registered in the trusted partner caller information. In examples, the trusted partner caller is searchable as indexed by a caller identifier (e.g., a phone number of the caller).

When the caller is determined as a trusted partner caller, the method 500 proceeds to determining priority call operation 512. In the determining priority call operation 512, the callee device determines whether the incoming call is designated as a priority call. In aspects, the received incoming call (e.g., the SIP INVITE message) comprises a designation of whether the incoming call is a priority call. In examples, the caller specifies a call as a priority call as the caller selects a trusted partner callee (number) as a callee number (e.g., Bob as a trusted partner callee is selected as a selected callee 310 and a priority call selector 314 is further selected as shown in FIG. 3B). In aspects, the priority call represents a type of call as specified in the call session request. The caller number identifies an origination of the incoming call. In some examples, the received SIP INVITE message indicates the incoming call being requested is a priority call. An indication of the priority call may be according to a prefix or appended number or a character in the callee identifier (e.g., an additional digit of '1' (one) in front of a phone number of the callee in the SIP INVITE (priority call) 232 as shown in FIG. 2).

When the incoming call is determined as a normal call (i.e., not a priority call) in the determining priority call operation 512, the method 500 proceeds to the end operation 520 by the callee device ignoring or declining the incoming call. The callee device does not ring or inform the callee about the incoming call. In aspects, the callee device declines the incoming call by transmitting a busy message according to a predetermined setting of the silent mode of the callee device.

When the incoming call is determined as a priority call in the determining priority call operation 512, the method 500 proceeds to generate alert operation 514. In the generate alert operation 514, the callee device generates an alert (e.g., a ringtone sound) to notify a user of the callee device (and/or the callee number) about the incoming call from the trusted partner caller number. In aspects, the generate alert operation 514 represents the exception operation of the silent mode in the callee device.

When a user of the callee device and/or the callee number selects answering the incoming call (e.g., selecting the "Answer Now" button 348 as described in FIG. 3D), the callee device executes start call session operation 516. In aspects, in the start call session operation 516, the callee device transmits a message to the caller device through a SIP server to start a new call session between the caller device and the callee device. In aspects, the callee device transmits a "200 OK" message to the calling device according to the SIP protocol. Th new call session starts when the caller device responds to the "200 OK" message from the callee device by transmitting an acknowledgement ("ACK") message to the callee device and the callee device receives the acknowledgement ("ACK") message from the caller device.

In update silent mode setting operation 518, setting of the silent mode may be updated. In aspects, the callee device disables the silent mode of the callee device after executing the exception operation of the silent mode by ringing the callee device and processing a call session. In some other aspects, the callee device maintains both the silent mode and the exception operation as being active. The method 500 proceeds to the end operation 520 after performing the update silent mode setting operation 518.

As should be appreciated, operations 502-520 are described for purposes of illustrating the present methods and systems and are not intended to limit the disclosure to a particular sequence of steps, e.g., steps may be performed in different order, additional steps may be performed, and disclosed steps may be excluded without departing from the present disclosure.

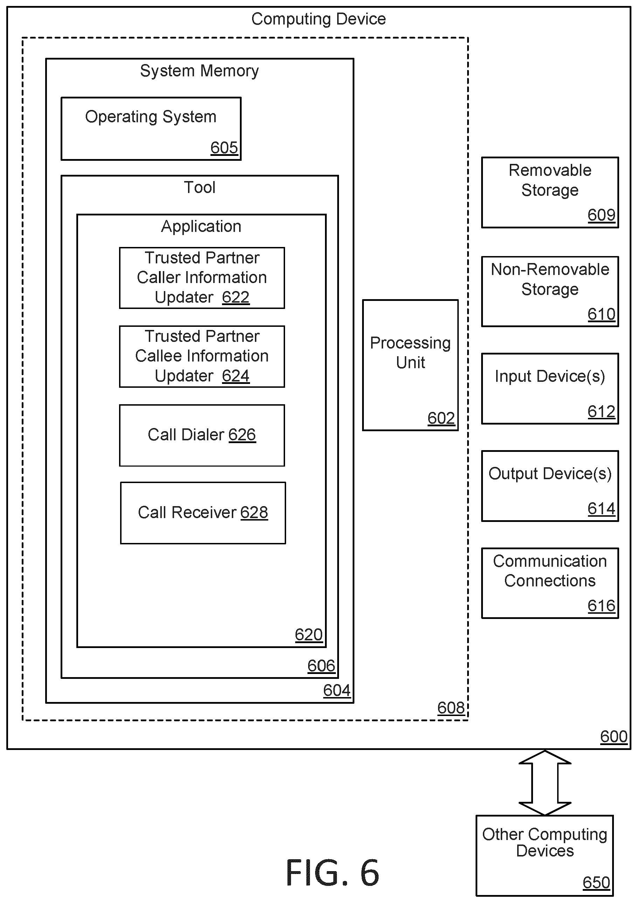

FIG. 6 is a block diagram illustrating example physical components of a computing device with which aspects of the disclosure may be practiced.

FIG. 6 is a block diagram illustrating physical components (e.g., hardware) of a computing device 600 with which aspects of the disclosure may be practiced. The computing device components described below may be suitable for the computing devices described above, including one or more devices associated with the caller device 102, the callee device 104, and the call exchange server 106, discussed above with respect to FIG. 1. In a basic configuration, the computing device 600 may include at least one processing unit 602 and a system memory 604. Depending on the configuration and type of computing device, the system memory 604 may comprise, but is not limited to, volatile storage (e.g., random access memory), non-volatile storage (e.g., read-only memory), flash memory, or any combination of such memories.

The system memory 604 may include an operating system 605 and one or more program modules 606 suitable for running software application 620, such as one or more components supported by the systems described herein. As examples, system memory 604 may store trusted partner caller information updater 622, trusted partner callee information updater 624, call dialer 626, call receiver 628. The operating system 605, for example, may be suitable for controlling the operation of the computing device 600.

Furthermore, embodiments of the disclosure may be practiced in conjunction with a graphics library, other operating systems, or any other application program and is not limited to any particular application or system. This basic configuration is illustrated in FIG. 6 by those components within a dashed line 608. The computing device 600 may have additional features or functionality. For example, the computing device 600 may also include additional data storage devices (removable and/or non-removable) such as, for example, magnetic disks, optical disks, or tape. Such additional storage is illustrated in FIG. 6 by a removable storage device 609 and a non-removable storage device 610.

As stated above, a number of program modules and data files may be stored in the system memory 604. While executing on the processing unit 602, the program modules 606 (e.g., the software application 620) may perform processes including, but not limited to, the aspects, as described herein. Other program modules that may be used in accordance with aspects of the present disclosure may include electronic mail and contacts applications, word processing applications, spreadsheet applications, database applications, slide presentation applications, drawing or computer-aided application programs, etc.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in FIG. 6 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 600 on the single integrated circuit (chip). Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general purpose computer or in any other circuits or systems.

The computing device 600 may also have one or more input device(s) 612 such as a keyboard, a mouse, a pen, a sound or voice input device, a touch or swipe input device, etc. The output device(s) 614 such as a display, speakers, a printer, etc. may also be included. The aforementioned devices are examples and others may be used. The computing device 600 may include one or more suitable communication connections 616 allowing communications with other computing devices 650. Examples of suitable communication connections 616 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 604, the removable storage device 609, and the non-removable storage device 610 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 600. Any such computer storage media may be part of the computing device 600. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

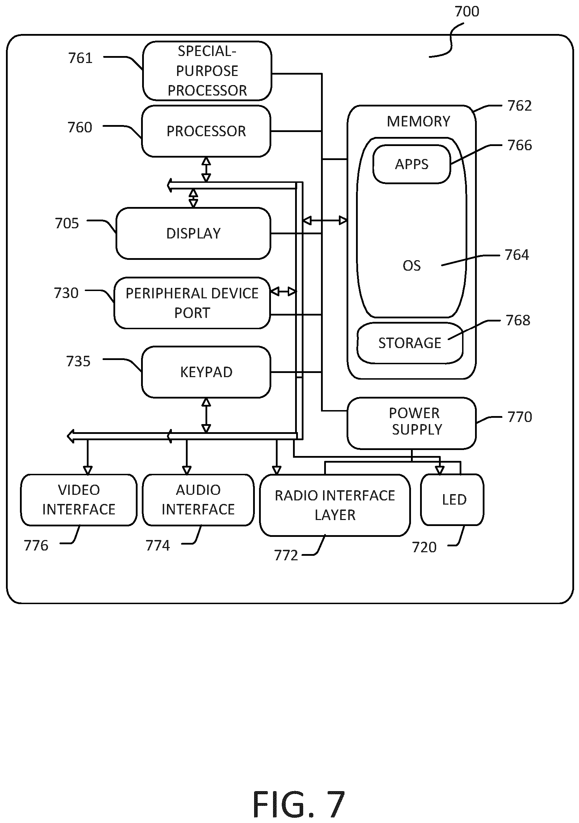

FIG. 7 is a simplified block diagram of a computing device with which aspects of the present disclosure may be practiced. FIG. 7 illustrates a system 700 that may, for example, be a mobile computing device, such as a mobile telephone, a smart phone, wearable computer (such as a smart watch), a tablet computer, a laptop computer, and the like, with which embodiments of the disclosure may be practiced. In one embodiment, the system 700 is implemented as a "smart phone" capable of running one or more applications (e.g., browser, e-mail, calendaring, contact managers, messaging clients, games, and media clients/players). In some aspects, the system 700 is integrated as a computing device, such as an integrated personal digital assistant (PDA) and wireless phone.

In a basic configuration, such a mobile computing device is a handheld computer having both input elements and output elements. The system 700 typically includes a display 705 and one or more input buttons that allow the user to enter information into the system 700. The display 705 may also function as an input device (e.g., a touch screen display).

If included, an optional side input element allows further user input. For example, the side input element may be a rotary switch, a button, or any other type of manual input element. In alternative aspects, system 700 may incorporate more or less input elements. For example, the display 705 may not be a touch screen in some embodiments. In another example, an optional keypad 735 may also be included, which may be a physical keypad, or a "soft" keypad generated on the touch screen display.

In various embodiments, the output elements include the display 705 for showing a graphical user interface (GUI), a visual indicator 720 (e.g., a light emitting diode), and/or an audio transducer 725 (e.g., a speaker). In some aspects, a vibration transducer is included for providing the user with tactile feedback. In yet another aspect, input and/or output ports are included, such as an audio input (e.g., a microphone jack), an audio output (e.g., a headphone jack), and a video output (e.g., a HDMI port) for sending signals to or receiving signals from an external device.

One or more application programs 766 may be loaded into the memory 762 and run on or in association with the operating system 764. Examples of the application programs include phone dialer programs, e-mail programs, personal information management (PIM) programs, word processing programs, spreadsheet programs, Internet browser programs, messaging programs, and so forth. The system 700 also includes a non-volatile storage area 768 within the memory 762. The non-volatile storage area 768 may be used to store persistent information that should not be lost if the system 700 is powered down. The application programs 766 may use and store information in the non-volatile storage area 768, such as e-mail or other messages used by an e-mail application, and the like. A synchronization application (not shown) also resides on the system 700 and is programmed to interact with a corresponding synchronization application resident on a host computer to keep the information stored in the non-volatile storage area 768 synchronized with corresponding information stored at the host computer. As should be appreciated, other applications may be loaded into the memory 762 and run on the system 700 described herein.

The system 700 has a power supply 770, which may be implemented as one or more batteries. The power supply 770 might further include an external power source, such as an AC adapter or a powered docking cradle that supplements or recharges the batteries.

The system 700 may also include a radio interface layer 772 that performs the function of transmitting and receiving radio frequency communications. The radio interface layer 772 facilitates wireless connectivity between the system 700 and the "outside world," via a communications carrier or service provider. Transmissions to and from the radio interface layer 772 are conducted under control of the operating system 764. In other words, communications received by the radio interface layer 772 may be disseminated to the application programs 766 via the operating system 764, and vice versa.

The visual indicator 720 may be used to provide visual notifications, and/or an audio interface 774 may be used for producing audible notifications via the audio transducer 725. In the illustrated embodiment, the visual indicator 720 is a light emitting diode (LED) and the audio transducer 725 is a speaker. These devices may be directly coupled to the power supply 770 so that when activated, they remain on for a duration dictated by the notification mechanism even though the processor 760 and other components might shut down for conserving battery power. The LED may be programmed to remain on indefinitely until the user takes action to indicate the powered-on status of the device. The audio interface 774 is used to provide audible signals to and receive audible signals from the user. For example, in addition to being coupled to the audio transducer 725, the audio interface 774 may also be coupled to a microphone to receive audible input, such as to facilitate a telephone conversation. In accordance with embodiments of the present disclosure, the microphone may also serve as an audio sensor to facilitate control of notifications, as will be described below. The system 700 may further include a video interface 776 that enables an operation of an on-board camera 730 to record still images, video stream, and the like.

It will be appreciated that system 700 may have additional features or functionality. For example, system 700 may also include additional data storage devices (removable and/or non-removable) such as, magnetic disks, optical disks, or tape. Such additional storage is illustrated in FIG. 7 by the non-volatile storage area 768.

Data/information generated or captured and stored via the system 700 may be stored locally, as described above, or the data may be stored on any number of storage media that may be accessed by the device via the radio interface layer 772 or via a wired connection between the system 700 and a separate computing device associated with the system 700, for example, a server computer in a distributed computing network, such as the Internet. As should be appreciated, such data/information may be accessed via the radio interface layer 772 or via a distributed computing network. Similarly, such data/information may be readily transferred between computing devices for storage and use according to any of a variety of data/information transfer and storage means, including electronic mail and collaborative data/information sharing systems.

The description and illustration of one or more aspects provided in this application are not intended to limit or restrict the scope of the disclosure as claimed in any way. The claimed disclosure should not be construed as being limited to any aspect, for example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

Described herein are systems and methods which are provided for selectively generating a notification on a callee device for an incoming call for a call session. The caller device registers a callee as a trusted partner callee in the caller device, thereby enabling the caller to initiate a call session request as a priority call to the callee. The callee device registers the caller as a trusted partner caller in the callee device. The callee device enables the callee to activate the silent mode and an exception to the silent mode. The caller device transmits a call session request with a priority call to the callee device. The callee device rings to notify the callee about the incoming call upon receiving a call session request for a priority call from a trusted partner caller while the silent mode and the exception operation are both active. A call session starts when the callee device answers.

As will be understood from the foregoing disclosure, one aspect of the technology relates to computer-implemented method for alerting an incoming call comprising: receiving, by a callee device, a call session request to initiating the incoming call; when a silent mode and an exception operation to the silent mode are both active in the callee device: determining, by the callee device, based on the call session request, the incoming call as a priority call from a caller number, wherein the priority call represents a type of call as specified in the call session request, and the caller number identifies an origination of the incoming call; determining, by the callee device, the caller number as a trusted partner caller number; and generating, by the callee device, based on the caller number being the trusted partner caller number and the incoming call being the priority call from the caller number, an alert, wherein the alert overrides the silent mode as the exception operation to the silent mode to inform a user of the callee device about the incoming call. The computer-implemented method further comprises adding the caller number as the trusted partner caller number in a trusted partner caller information; and activating the silent mode in the callee device. The call session request comprises a Session Initiation Protocol (SIP) INVITE message according to a SIP protocol. The SIP INVITE message indicates the incoming call as the priority call. The SIP INVITE message comprises data indicates the incoming call as the priority call as a part of caller identification information. The receiving the call session request further comprises receiving the call session request over a 5G telecommunication network. The computer-implemented method further comprises: registering, by a caller device, the callee number of the callee device as a trusted partner callee number in the caller device; interactively receiving callee information of the callee number for initiating a call session with the callee number; displaying, by the caller device, a priority call interactive icon, wherein the priority call interactive icon specifies initiating the call session to the callee number as the priority call; interactively receiving, by the caller device, a selection of the priority call interactive icon; generating, the call session request, wherein the call session request comprises callee information and a designation of the priority call; transmitting, by the caller device, the call session request to the callee device; receiving a response message from the callee device; and initiating, based on the response message from the callee device, the call session with the callee device. The silent mode, when active, causes the callee device to suppress generating the ringtone sound for notifying the incoming call to the callee number. The exception operation to the silent mode, when active, causes the callee device to generate the ringtone sound while the silent mode is active.

In another aspect, the technology relates to a system for alerting an incoming call. The system comprises a memory, a first processor configured to execute operations as a caller device of a call session, and a second processor configured to execute operations as a callee device of the call session. The first caller is configured to execute operations comprising: registering, by a caller device, the callee number of the callee device as a trusted partner callee number in the caller device; interactively receiving callee information of the callee number for initiating a call session with the callee number; displaying, by the caller device, a priority call interactive icon, wherein the priority call interactive icon specifies initiating the call session to the callee number as the priority call; interactively receiving, by the caller device, a selection of the priority call interactive icon; generating, the call session request, wherein the call session request comprises callee information and a designation of the priority call; transmitting, by the caller device, the call session request to the callee device. The second processor is configured to execute operations comprising: receiving the call session request as a request for initiating the incoming call as the call session; and when a silent mode and an exception operation to the silent mode are both active in the callee device: determining, by the callee device, based on the call session request, the incoming call as the priority call from a caller number; determining, by the callee device, the caller number as a trusted partner caller number; and generating, by the callee device, based on the caller number being the trusted partner caller number and the incoming call being the priority call from the caller number, an alert as the exception operation to the silent mode to inform a user of the callee number about the incoming call. The second processor is further configured to execute operations comprising: adding the caller number as the trusted partner caller number in a trusted partner caller information; activating the silent mode in the callee device; when the user of the callee number interactively responds to the alert, transmitting the response to the caller device, The first processor is further configured to execute operations comprising: receiving the response message from the callee device; and initiating, based on the response message from the callee device, the call session with the callee device. The call session request comprises a Session Initiation Protocol (SIP) INVITE message according to a SIP protocol, and the SIP INVITE message indicates the incoming call as the priority call. The SIP INVITE message comprises data indicating the incoming call as the priority call as a part of caller identification information. The receiving the call session request further comprises receiving the call session request over a 5G telecommunication network. The silent mode, when active, causes the callee device to suppress generating the ringtone sound for notifying the incoming call to the callee number. The exception operation to the silent mode, when active, causes the callee device to generate the ringtone sound while the silent mode is active.

In a further aspect, the technology relates to a device for alerting an incoming call. The device comprises a memory; and a processor configured to execute operations comprising: receiving, by the device, a call session request as a request for initiating the incoming call, wherein the device comprises a callee device of a subsequent call session; and when a silent mode and an exception operation to the silent mode are both active in the callee device: determining, by the callee device, based on the call session request, the incoming call as a priority call from a caller number; determining, by the callee device, the caller number as a trusted partner caller number; and generating, by the callee device, based on the caller number being the trusted partner caller number and the incoming call being the priority call from the caller number, an alert as the exception operation to the silent mode to inform a user of the callee number about the incoming call. The processor is further configured to execute operations comprising adding the caller number as the trusted partner caller in a trusted partner caller number information; and activating the silent mode in the callee device. The call session request comprises a Session Initiation Protocol (SIP) INVITE message according to a SIP protocol, and the SIP INVITE message indicates the incoming call as the priority call. The SIP INVITE message comprises data indicating the incoming call as the priority call as a part of caller identification information. The silent mode, when active, causes the callee device to suppress generating the ringtone sound for notifying the incoming call to the callee number, and the exception operation to the silent mode, when active, causes the callee device to generate the ringtone sound while the silent mode is active, and the incoming call comprises transmission of data over a 5G telecommunication network.

Any of the one or more above aspects in combination with any other of the one or more aspect. Any of the one or more aspects as described herein.

## Claims

1. A computer-implemented method (500) for alerting an incoming call, comprising:
receiving (508), by a callee device (104), a call session request to initiating the incoming call;
when a silent mode and an exception operation to the silent mode are both active in the callee device:
determining (510), by the callee device, a caller number as a trusted partner caller number;
determining (512), by the callee device, based on the call session request, the incoming call as a priority call from the caller number, wherein the priority call represents a type of call as specified in the call session request, and the caller number identifies an origination of the incoming call; and
generating (514), by the callee device, based on the caller number being the trusted partner caller number and the incoming call being the priority call from the caller number, an alert, wherein the alert overrides the silent mode as the exception operation to the silent mode to inform a user of the callee device about the incoming call.

2. The computer-implemented method according to claim 1, further comprising:
adding the caller number as the trusted partner caller number in a trusted partner caller information; and
activating the silent mode in the callee device.

3. The computer-implemented method according to claim 1,
wherein the call session request comprises a Session Initiation Protocol, SIP, INVITE message according to a SIP protocol, and
the SIP INVITE message indicates the incoming call as the priority call.

4. The computer-implemented method according to claim 3,
wherein the SIP INVITE message comprises data indicates the incoming call as the priority call as a part of caller identification information.

5. The computer-implemented method according to claim 1, wherein the receiving the call session request further comprises receiving the call session request over a 5G telecommunication network.

6. The computer-implemented method according to claim 1, further comprising:
registering, by a caller device, a callee number of the callee device as a trusted partner callee number in the caller device;
interactively receiving callee information of the callee number for initiating a call session with the callee number;
displaying, by the caller device, a priority call interactive icon, wherein the priority call interactive icon specifies initiating the call session to the callee number as the priority call;
interactively receiving, by the caller device, a selection of the priority call interactive icon;
generating, the call session request, wherein the call session request comprises callee information and a designation of the priority call;
transmitting, by the caller device, the call session request to the callee device;
receiving a response message from the callee device; and
initiating, based on the response message from the callee device, the call session with the callee device.

7. The computer-implemented method according to claim 1, wherein the silent mode, when active, causes the callee device to suppress generating the ringtone sound for notifying the incoming call to a callee number.

8. The computer-implemented method according to claim 1, wherein the exception operation to the silent mode, when active, causes the callee device to generate the ringtone sound while the silent mode is active.

9. A system (600) for alerting an incoming call, comprising:
a memory (604); and
a first processor configured to execute operations as a caller device of a call session, comprising:
registering (404), by the caller device, a callee number of a callee device as a trusted partner callee number in the caller device;
interactively receiving (406) callee information of the callee number for initiating the call session with the callee number;
displaying (410), by the caller device, a priority call interactive icon, wherein the priority call interactive icon specifies initiating the call session to the callee number as the priority call;
interactively receiving (412), by the caller device, a selection of the priority call interactive icon;
generating (414), a call session request, wherein the call session request comprises callee information and a designation of the priority call;
transmitting, by the caller device, the call session request to the callee device; and
a second processor configured to execute operations as the callee device of the call session, comprising:
receiving (508) the call session request as a request for initiating the incoming call as the call session; and
when a silent mode and an exception operation to the silent mode are both active in the callee device:
determining (512), by the callee device, based on the call session request, the incoming call as the priority call from a caller number;
determining (510), by the callee device, the caller number as a trusted partner caller number; and
generating (514), by the callee device, based on the caller number being the trusted partner caller number and the incoming call being the priority call from the caller number, an alert as the exception operation to the silent mode to inform a user of the callee number about the incoming call.

10. The system according to claim 9,
the second processor further configured to execute operations comprising:
adding the caller number as the trusted partner caller number in a trusted partner caller information;
activating the silent mode in the callee device;
when the user of the callee number interactively responds to the alert, transmitting the response to the caller device; and
the first processor further configured to execute operations comprising:
receiving the response message from the callee device; and
initiating, based on the response message from the callee device, the call session with the callee device.

11. The system according to claim 9,
wherein the call session request comprises a Session Initiation Protocol, SIP, INVITE message according to a SIP protocol, and
the SIP INVITE message indicates the incoming call as the priority call.

12. The system according to claim 11,
wherein the SIP INVITE message comprises data indicating the incoming call as the priority call as a part of caller identification information.

13. The system according to claim 9,
wherein the receiving the call session request further comprises receiving the call session request over a 5G telecommunication network.

14. A device for alerting an incoming call, comprising:
a memory; and
a processor configured to execute operations comprising:
receiving, by the device, a call session request as a request for initiating the incoming call, wherein the device comprises a callee device of a subsequent call session; and
when a silent mode and an exception operation to the silent mode are both active in the callee device:
determining, by the callee device, based on the call session request, the incoming call as a priority call from a caller number;
determining, by the callee device, the caller number as a trusted partner caller number; and
generating, by the callee device, based on the caller number being the trusted partner caller number and the incoming call being the priority call from the caller number, an alert as the exception operation to the silent mode to inform a user of a callee number about the incoming call.

15. The device according to claim 14, the processor further configured to execute operations comprising:
adding the caller number as the trusted partner caller in a trusted partner caller number information; and
activating the silent mode in the callee device.
